# EUROPÄISCHE PATENTSCHRIFT

(11) **EP 1 619 565 B1**
(45) Veröffentlichungstag und Bekanntmachung des Hinweises auf die Patenterteilung: **21.03.2012**
(21) Anmeldenummer: 05015856.7
(22) Anmeldetag: 21.07.2005
(51) Int. Cl.: G05B 19/042, G05B 19/418

(54) **Verfahren und Vorrichtung zum sicheren Schalten eines Automatisierungsbussystems**
Method and apparatus for safe switching of a bus- based automation system
Procédure et dispositif pour commuter sûrement un système d'automatisation avec bus.

(30) Priorität: 22.07.2004 DE 102004035442
(43) Veröffentlichungstag der Anmeldung: 25.01.2006
(73) Patentinhaber: Phoenix Contact GmbH & Co. KG, 32825 Blomberg (DE)
(72) Erfinder: Meyer-Gräfe, Karsten, 33161 Hövelhof (DE); Kalhoff, Johannes, 32825 Blomberg (DE)
(74) Vertreter: Herden, Andreas F.

(56) Entgegenhaltungen:
- DE-A1- 3 522 220
- DE-A1- 4 225 834
- DE-A1- 19 840 562
- US-A- 6 021 356

## Beschreibung

Die Erfindung betrifft allgemein industrielle Automatisierungssysteme, und insbesondere Automatisierungssysteme, welche zumindest ein Bussystem mit daran angeschlossenen Busteilnehmern und eine zentrale Steuerungseinrichtung umfassen, sowie Verfahren zu deren Betrieb.

Steuer- und Datenübertragungsanlagen nehmen heute aufgrund des damit möglichen hohen Automatisierungsgrades eine herausragende Stellung in der industriellen Fertigung und Anlagensteuerung ein. Sehr verbreitet ist die Verwendung von.Feldbussystemen, über welche eine Vielzahl dezentraler Ein- und Ausgabeeinheiten mit einer zentralen Steuerungseinrichtung verbunden werden.

Zunehmend besteht jedoch der Wunsch oder das Erfordernis, die Konfiguration des Bussystems bei laufendem Prozess durch An- oder Abschalten dezentraler Einheiten zu ändern, beispielsweise um einen Werkzeugwechsel an Robotern vornehmen zu können oder mobile Einheiten, die sich planmäßig nur zeitweise am Bus befinden, im Bussystem aufnehmen und wieder entfernen zu können oder um auch einfach nur zeitlich begrenzte Abschaltungen für Wartungszwecke vonehmen zu können. Ferner können Störungen, beispielsweise durch elektromagnetische Einstrahlung, ein Grund für Konfigurationsänderungen des Bussystems sein.

Von Netzwerken wie dem Ethernet ist bekannt, dass diese bei Änderungen der Konfiguration von angeschlossenen Geräten weiterarbeiten und den abgeschalteten beziehungsweise ausgefallenen Teilnehmer ignorieren.

Zur Einhaltung von Sicherheitsstandards werden in der Automatisierungstechnik jedoch vorwiegend Feldbussysteme in Verbindung mit sicherheitsgerichteten Buskomponenten eingesetzt. Für Konfigurationsänderungen besteht bei INTERBUS-Systemen beispielsweise die Möglichkeit, durch entsprechende Schaltbefehle Baugruppen vom Bus zu trennen. In diesem Fall, wie auch im Fall einer Störung, wird das Feldbussystem neu initialisiert. Dementsprechend kommt es in diesen Systemen bei Konfigurationsänderungen kurzzeitig zu einer Unterbrechung der Datenkommunikation.

Wird die Kommunikation zu einer Buskomponente unterbrochen, so kann diese eine Not-Funktionalität aufrecht erhalten, solange durch diese Buskomponente kein gefahrbringender Prozess gesteuert wird. Bei der Steuerung gefahrbringender Prozesse kann die Sicherheit in der Regel nur durch eine Abschaltung der gesteuerten Maschine gewährleistet werden. Zu diesem Zweck weisen sicherheitsgerichtete Buskomponenten häufig eine interne Watchdog-Schaltungsanordnung auf, welche nur nach Erhalt einer entsprechenden Information zurückgesetzt wird. Bei Ausbleiben dieser Information wird der Prozess automatisch in einen sicheren Zustand gebracht.

Häufige Konfigurationsänderungen, insbesondere bei Systemen, die auch sicherheitsgerichtete Buskomponenten aufweisen, reduzieren dementsprechend deren Verfügbarkeit.

Die DE 3522220 A1 offenbart eine Anordnung zur Ausgabe von Steuersignalen an Stellelemente eines Prozessors.

Der Erfindung liegt die Aufgabe zugrunde, die Verfügbarkeit von Automatisierungssystemen zu erhöhen. Vorteilhaft wäre dies unter Einhaltung von Sicherheitsanforderungen so durchzuführen, dass das Bussystem sowohl sicherheitsgerichtete als auch nicht sicherheitsgerichtete Busteilnehmer aufweisen kann.

Die Aufgabe wird in überraschend einfacher Weise durch einen Gegenstand gemäß einem der anhängenden unabhängigen Ansprüche gelöst. Vorteilhafte Ausführungsformen und Weiterbildungen sind in den Unteransprüchen umschrieben.

Das erfindungsgemäße Verfahren dient zum Betrieb eines Automatisierungssystems, das zumindest ein Bussystem mit daran angeschlossenen Busteilnehmern sowie eine zentrale Steuerungseinrichtung aufweist.

Durch die Steuerungseinrichtung wird zumindest ein Busteilnehmer parametrisiert und/oder programmiert. Der Busteilnehmer kann eine Unterbrechung zu der Steuerungseinrichtung erkennen und in diesem Fall zumindest einen Ausgang nach Vorgabe der Parametrisierung und/oder Programmierung steuern.

Durch dieses Verfahren, insbesondere durch die Parametrisierung beziehungsweise Programmierung des Busteilnehmers, ist es möglich, für kurze Unterbrechungen der Datenkommunikation wie sie bei Schaltvorgängen des Bussystems auftreten, die Steuerung auch gefahrbringender Prozesse aufrecht zu erhalten.

Vorteilhaft wird eine Unterbrechung der Verbindung zu der Steuerungseinrichtung von dem Busteilnehmer dadurch erkannt, dass er während einer festlegbaren Zeitdauer kein Signal von der Steuerungseinrichtung erhält.

Da die autarke Steuerung durch den Busteilnehmer in der Regel nicht für den Dauerbetrieb geeignet ist, sieht das Verfahren eine zweite festlegbare Zeitdauer vor, nach deren Ablauf der zumindest eine Ausgang des Busteilnehmers, über den die Steuerung des Prozesses erfolgt, in einen sicheren Zustand geschaltet wird, falls innerhalb dieser zweiten Zeitdauer die Verbindung zur Steuerungseinrichtung nicht wieder hergestellt ist.

Zur Erhöhung der Verfügbarkeit des Automatisierungssystems liegt diese zweite Zeitdauer vorteilhaft über der Zeitdauer, die zur Ausführung eines Schaltvorgangs des Bussystems erforderlich ist

Mit Vorteil kann der zumindest eine Busteilnehmer das Ein- oder Ausschalten zumindest einer Baugruppe bewirken. Bei dieser Baugruppe kann es sich beispielsweise um einen Aktor handeln, der zur Gewährleistung der Sicherheit eingeschaltet wird, wie beispielsweise eine Türverriegelung. Es kann sich aber auch um einen gefahrbringenden Aktor handeln, der zur Gewährleistung der Sicherheit ausgeschaltet wird, wie beispielsweise ein Roboterarm oder eine Schneidvorrichtung.

Um bei bestimmten Anwendungen den Prozess durch den zumindest einen Busteilnehmer weiterführen zu können, sieht das Verfahren weiterhin vor, dass der Busteilnehmer vorteilhaft zumindest einen Eingang aufweist, bei welchem die Signale an diesem Eingang durch den Busteilnehmer ausgewertet werden und als weitere Parameter für die Steuerung über den zumindest einen Ausgang des Busteilnehmers herangezogen werden.

Es liegt auch im Rahmen der Erfindung, ein Automatisierungssystem anzugeben, das zur Ausführung des beschriebenen Verfahrens geeignet ist und dementsprechend zumindest ein Bussystem mit daran angeschlossenen Busteilnehmern und zumindest eine an das Bussystem angeschlossene Steuerungseinrichtung umfasst, sowie zumindest einen durch die Steuerungseinrichtung parametrisierbar und/oder programmierbar ausgebildeten Busteilnehmer, der Mittel zur Erkennung einer Unterbrechung der Verbindung zu der Steuerungseinrichtung und Mittel zum Steuern zumindest eines Ausgangs aufweist.

Um zu erkennen, dass eine festlegbare Zeitdauer verstrichen ist, umfasst der zumindest eine Busteilnehmer vorteilhaft Mittel zum Überwachen der Zeit.

Weiterhin umfasst der zumindest eine Busteilnehmer bevorzugt Mittel zum Ein- oder Ausschalten zumindest einer Baugruppe, um Aktoren der gesteuerten Anlage aktivieren beziehungsweise deaktivieren zu können.

Falls zum Steuern des Prozesses Sensoren durch den zumindest einen Busteilnehmer ausgelesen werden müssen, so umfasst der Busteilnehmer bevorzugt zumindest einen Eingang sowie Mittel zum Auswerten der an diesem Eingang anliegenden Signale.

Besonders geeignet zum Ausführen des erfindungsgemäßen Verfahrens sind Automatisierungssysteme mit ringförmigen Bussystemen, insbesondere nach dem INTERBUS-Standard.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung eines Bussystems mit angeschlossenen Busteilnehmern und zentraler Steuerungseinrichtung,
- Fig. 2:: das Bussystem aus Fig. 1 mit einem zusätzlich angeschlossenen Busteilnehmer,
- Fig. 3:: das Bussystem aus Fig. 1, bei dem aufgrund einer Störung mehrere Busteilnehmer aus dem Bussystem entfernt wurden,
- Fig. 4:: eine schematische Darstellung eines Ausführungsbeispiels, bei dem ein gefahrbringender Prozess gesteuert wird,
- Fig. 5:: eine schematische Darstellung eines Ausführungsbeispiels, bei dem ein Standard-Prozess gesteuert wird, und
- Fig. 6:: ein Zeitdiagramm zur Veranschaulichung der Zustände eines Busteilnehmers.

Das erfindungsgemäße Verfahren eignet sich besonders für alle ringförmigen Bussysteme, wobei die nachfolgend beschriebenen Ausführungsbeispiele den INTERBUS-Standard verwenden.

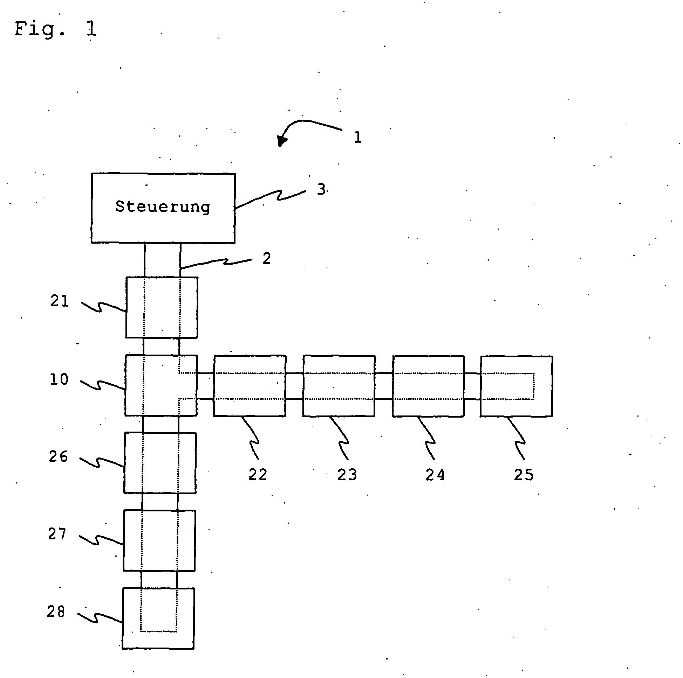

Der schematische Aufbau eines Automatisierungssystems 1 mit einem Bussystem 2 nach dem INTERBUS-Standard ist in Fig. 1 dargestellt.

Topologisch ist INTERBUS ein Ringsystem, d. h. alle Busteilnehmer 21 bis 28 sind aktiv in einen geschlossenen Übertragungsweg eingebunden. Jeder Busteilnehmer 21 bis 28 regeneriert das ankommende Signal und leitet es weiter. Als Besonderheit gegenüber anderen Ringsystemen werden beim INTERBUS-System sowohl die Datenhinleitung als auch die -rückleitung innerhalb eines Kabels durch sämtliche Busteilnehmer geführt. Hierdurch ergibt sich das physikalische Erscheinungsbild einer Linien- bzw. Baumstruktur. Von der Steuerungseinrichtung 3, die als Bus-Master wirkt, geht ein Hauptstrang aus, von dem aus mittels eines Buskopplers 10 ein Subsystem zur Strukturierung des Gesamtsystems gebildet wird.

Die Zuweisung der Daten zu den einzelnen Busteilnehmern erfolgt nicht, wie in anderen Systemen notwendig, über die Vergabe einer Busadresse, sondern automatisch über die physikalische Lage der Busteilnehmer 21 bis 28 im System.

INTERBUS arbeitet nach dem Summenrahmenverfahren mit nur einem Protokollrahmen für die Nachrichten aller Busteilnehmer 21 bis 28. In den Summenrahmen werden die Daten aller verbundenen Busteilnehmer, zu einem Block zusammengefasst, eingebunden. Praktisch kann man sich dieses Verfahren als ein Register vorstellen, das von den zu einem Ringsystem verbundenen Busteilnehmern 21 bis 28 gebildet wird.

Bei Änderungen der Konfiguration des Bussystems werden durch Ausführen von Identifikationszyklen alle Busteilnehmer erneut identifiziert und der Summenrahmen neu definiert.

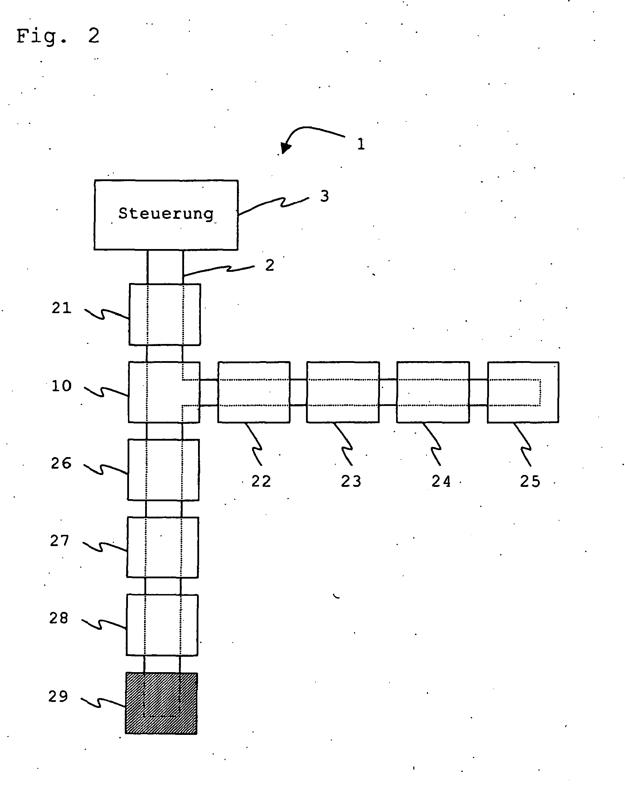

Konfigurationsänderungen können, wie in Fig. 2 dargestellt, beispielsweise durch Anschalten eines weiteren Busteilnehmers 29 an das Bussystem 2 auftreten.

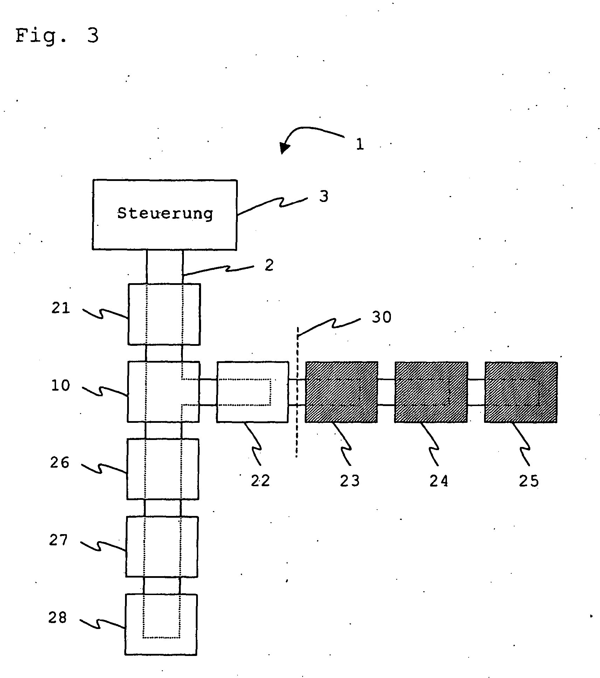

Ein weiteres Beispiel für mögliche Änderungen der Konfiguration des Bussystems 2 ist in Fig. 3 dargestellt. Erkennt die Steuerungseinrichtung eine Störung 30 der Datenübertragung, werden Identifikationszyklen ausgeführt, wobei dem Bussystem 2 jeweils ein weiterer Busteilnehmer hinzugefügt wird. Auf diese Weise kann die Störung 30 lokalisiert werden und wie in diesem Beispiel das Bussystem unter Ausschluss der Busteilnehmer 23 bis 25 weiterbetrieben werden.

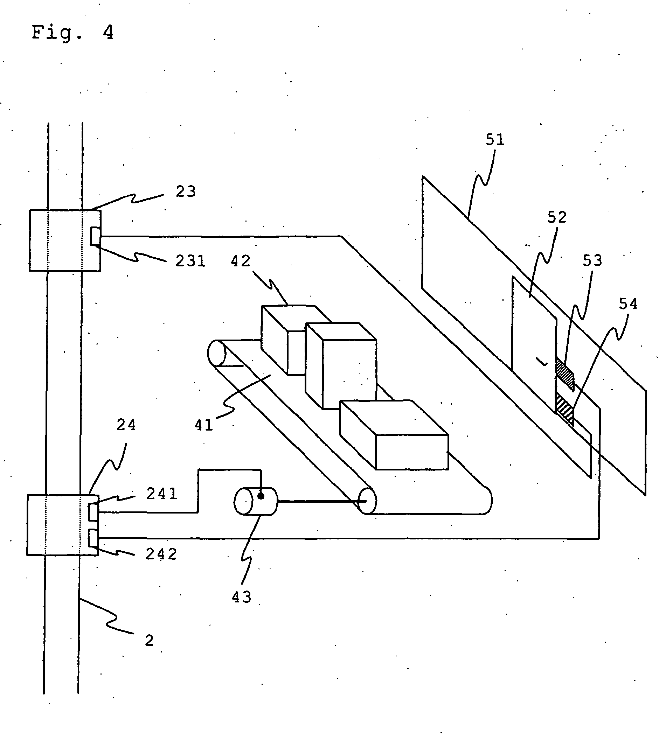

Fig. 4 zeigt einen Teil eines erfindungsgemäßen Automatisierungssystems. Über einen Ausgang 241 eines Busteilnehmers 24 wird der Antrieb 43 eines Förderbandes 41, auf dem Fördergut 42 transportiert wird, gesteuert. Dieser gefahrbringende Prozess ist durch eine Verschutzung 51 abgeschirmt. Zutritt ist nur über eine Schutztür 52 möglich. Im Normalbetrieb wird über den Eingang 231 des Busteilnehmers 23, der an das Bussystem 2 angeschlossen ist, ein Sensor 54 ausgelesen, der auf das Öffnen der Schutztür 52 anspricht.
Wird die Schutztür geöffnet, so wird von der hier nicht dargestellten Steuerungseinrichtung 3 ein Steuerbefehl an den Busteilnehmer 24 übertragen, der das Abschalten des Antriebs 43 des Förderbandes 41 über den Ausgang 241 bewirkt. Hierdurch wird bei Betreten des gefahrbringenden Bereiches die Sicherheit gewährleistet. Die Busteilnehmer 23 und 24 sind dabei als sicherheitsgerichtete Busteilnehmer ausgelegt.

Ist aufgrund eines Schaltvorganges oder einer Störung des Bussystems 2 die Datenkommunikation zwischen der Steuerungseinrichtung 3 und den Busteilnehmern 23 und/oder 24 unterbrochen, so ist der Normalbetrieb nicht mehr möglich. In diesem Fall schaltet der Busteilnehmer 24 in einen Quasi-Sicherheitszustand. Das Verhalten des Busteilnehmers 24 bestimmt sich dabei durch eine zuvor durch die Steuerungseinrichtung 3 vorgenommene Programmierung beziehungsweise Parametrisierung.

In diesem Ausführungsbeispiel kann in dem Quasi-Sicherheitszustand das Förderband 41 weiterhin angetrieben werden. Die Sicherheit wird dadurch gewährleistet, dass über den Ausgang 242 des Busteilnehmers 24 eine Verriegelung 53 der Schutztür 52 aktiviert wird, so dass ein Betreten des gefahrbringenden Bereiches nicht möglich ist.

Wird innerhalb einer festgelegten Zeitdauer die Datenkommunikation zwischen Steuerungseinrichtung 3 und den Busteilnehmern 23 und 24 wieder hergestellt, so kann der Normalbetrieb fortgesetzt werden. Auf diese Weise können unter Gewährleistung der Sicherheit Schaltvorgänge des Bussystems überbrückt und dadurch die Verfügbarkeit des Gesamtsystems erhöht werden.

Wird die Datenkommunikation innerhalb der festgelegten Zeitdauer nicht wieder hergestellt, so schaltet der Busteilnehmer 24 in einen Sicherheitsendzustand. In diesem Ausführungsbeispiel wird im Sicherheitsendzustand der Antrieb 43 des Förderbandes 41 über den Ausgang 241 abgeschaltet und die Verriegelung 53 der Schutztür 52 wieder deaktiviert.

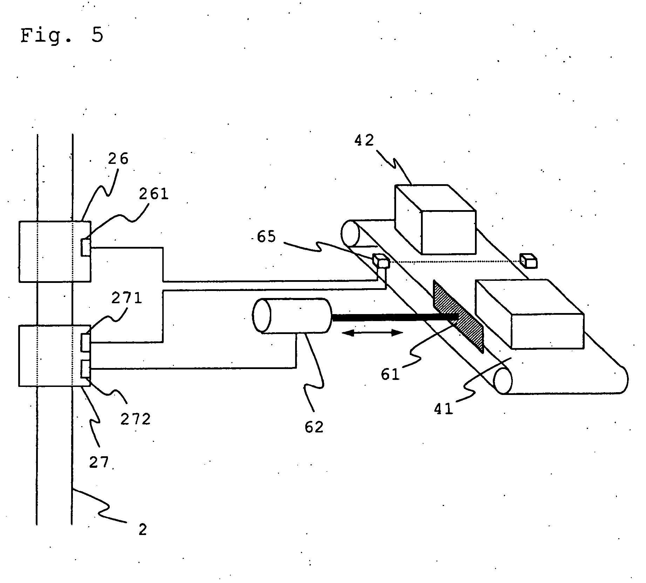

Fig. 5 zeigt ein weiteres Ausführungsbeispiel, in dem ein nicht als gefahrbringend eingestufter Prozess gesteuert wird. Im .Normalbetrieb wird über den Eingang 261 des Busteilnehmers 26 ein Sensor 65 ausgelesen, der ein Stück Fördergut 42, das auf einem Förderband 41 transportiert wird, erkennt. Über einen Ausgang 272 des Busteilnehmers 27 wird der Antrieb 62 eines Schiebers 61 gesteuert.

Bei,Unterbrechung der Datenkommunikation über das Bussystem 2 schaltet in diesem Ausführungsbeispiel der Busteilnehmer 27 in einen Übergangszustand. In diesem Zustand kann der Schieber weiterhin gesteuert werden, da der Busteilnehmer 27 einen eigenen Eingang 271 aufweist, über den die Signale des Sensors 65 eingelesen werden. Auch in diesem Ausführungsbeispiel kann die Programmierung beziehungsweise Parametrisierung des Busteilnehmers 27 vorsehen, dass der Übergangszustand nur für eine festlegbare maximale Zeitdauer aufrecht erhalten wird. Erhält der Busteilnehmer 27 nach Ablauf dieser Zeitdauer weiterhin keine Signale von der Steuerungseinrichtung 3, so schaltet der Busteilnehmer 27 in einen Endzustand, in dem beispielsweise der Schieber 61 in eine Ruheposition gefahren wird und der Antrieb 62 des Schiebers 61 abgeschaltet wird.

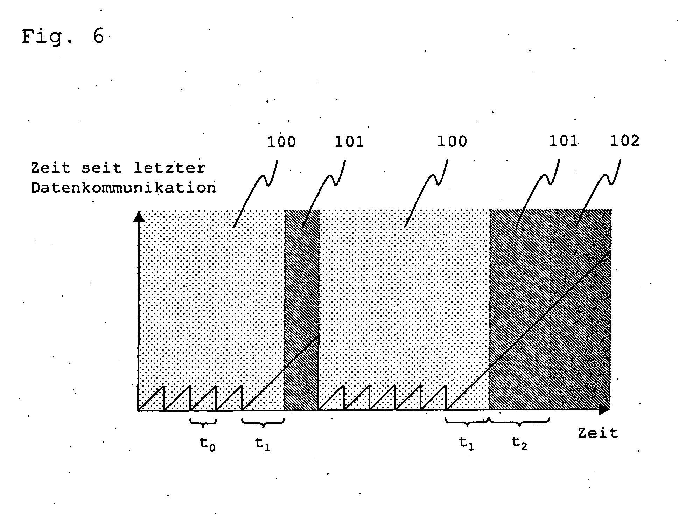

In Fig. 6 ist das erfindungsgemäße Verfahren nochmals durch ein Zeitdiagramm veranschaulicht. Dargestellt ist die Zeit seit der jeweils letzten Datenkommunikation zwischen einer Steuerungseinrichtung 3 und einem entsprechend programmierten beziehungsweise parametrisierten sicherheitsgerichteten Busteilnehmer 24.

Im Normalbetrieb 100 erfolgt in regelmäßigen Zeitintervallen t₀ eine Datenkommunikation. Wird für eine festlegbare Zeitdauer t₁ keine Datenkommunikation registriert, so wird die Verbindung als unterbrochen angenommen und der Busteilnehmer 24 schaltet in einen Quasi-Sicherheitszustand 101. Dieser Quasi-Sicherheitszustand 101 wird für eine festlegbare Zeitdauer t₂ aufrecht erhalten.

Erfolgt innerhalb der Zeitdauer t₂ eine Datenkommunikation, schaltet der.Busteilnehmer wieder in den Normalbetrieb 100. Andernfalls schaltet der Busteilnehmer nach Ablauf der Zeitdauer t₂ in einen Sicherheitsendzustand 102.

Für nicht sicherheitsgerichtete Busteilnehmer 27 ist der Ablauf entsprechend.

## Patentansprüche

1. Verfahren zum Betrieb eines Automatisierungssystems (1), wobei das Automatisierungssystem (1) zumindest ein Bussystem (2) mit daran angeschlossenen Busteilnehmern (21 bis 29), sowie eine zentrale Steuerungseinrichtung (3) aufweist, wobei zumindest ein Busteilnehmer (21 bis 29) gefahrbringende Prozesse ausführt, umfassend
- Parametrisierung und/oder Programmierung zumindest eines Busteilnehmers (24, 27) durch die Steuerungseinrichtung (3),
- Erkennen einer Unterbrechung der Verbindung zu der Steuerungseinrichtung (3) durch den zumindest einen Busteilnehmer (24, 27),
- Steuern zumindest eines Ausgangs (241, 242, 272) des zumindest einen Busteilnehmers (24, 27) durch den zumindest einen Busteilnehmer (24, 27) in Abhängigkeit der Parametrisierung und/oder der Programmierung bei Erkennen einer Unterbrechung der Verbindung zu der Steuerungseinrichtung (3), wobei der zumindest eine gefahrbringende Prozesse ausführende Busteilnehmer (21 bis 29) vom Normalbetrieb zunächst in einen Quasi-Sicherheitszustand geschaltet wird, in welchem es möglich ist, die Steuerung auch gefahrbringender Prozesse aufrecht zu erhalten.

2. Verfahren nach Anspruch 1, bei welchem eine Unterbrechung **dadurch** erkannt wird, dass der zumindest eine Busteilnehmer (24, 27) während einer festlegbaren Zeitdauer (t₁) kein Signal von der Steuerungseinrichtung (3) erhält.

3. Verfahren nach einem der vorstehenden Ansprüche, bei welchem der zumindest eine Ausgang (241, 272) des zumindest einen Busteilnehmers (24, 27) nach einer festlegbaren Zeitdauer (t₂) in einen sicheren Zustand schaltet, wenn innerhalb dieser Zeitdauer die Verbindung zu der Steuerungseinrichtung (3) nicht wieder hergestellt ist.

4. Verfahren nach einem der vorstehenden Ansprüche, bei welchem der zumindest eine Busteilnehmer (24, 27) das Ein- oder Ausschalten zumindest einer Baugruppe (43, 62) des Automatisierungssystems (1) bewirkt.

5. Verfahren nach einem der vorstehenden Ansprüche, bei welchem der zumindest eine Busteilnehmer (27) zumindest einen Eingang (271) aufweist und das Verfahren das Auswerten von Signalen an dem Eingang durch den zumindest einen Busteilnehmer (27) umfasst.

6. Automatisierungssystem (1), umfassend zumindest ein Bussystem (2) mit daran angeschlossenen Busteilnehmern (21 bis 29), wobei zumindest ein Busteilnehmer (21 bis 29) gefahrbringende Prozesse ausführt und
zumindest eine an das Bussystem (2) angeschlossene Steuerungseinrichtung (3),
welches zumindest einen durch die Steuerungseinrichtung (3) parametrisierbar und/oder programmierbar ausgebildeten Busteilnehmer (24, 27) aufweist, der Mittel zur Erkennung einer Unterbrechung der Verbindung zu der Steuerungseinrichtung (3) und Mittel zum Steuern zumindest eines Ausgangs (241, 242, 272) in Abhängigkeit der Parametrisierung und/oder der Programmierung bei Erkennen der Unterbrechung aufweist,
und welches Mittel zum Schalten des zumindest einen gefahrbringende Prozesse ausführenden Busteilnehmers (21 bis 29) bei Erkennung einer Unterbrechung der Verbindung vom Normalbetrieb zunächst in einen Quasi-Sicherheitszustand, in welchem es möglich ist, die Steuerung auch gefahrbringender Prozesse aufrecht zu erhalten, aufweist.

7. Automatisierungssystem (1) nach Anspruch 6, bei welchem der zumindest eine Busteilnehmer (24, 27) Mittel zum Überwachen der Zeit umfasst.

8. Automatisierungssystem (1) nach einem der vorstehenden Ansprüche 6 bis 7, bei welchem der zumindest eine Busteilnehmer (24, 27) Mittel zum Ein- oder Ausschalten zumindest einer Baugruppe (43, 62) umfasst.

9. Automatisierungssystem (1) nach einem der vorstehenden Ansprüche 6 bis 8, bei welchem der zumindest eine Busteilnehmer (27) zumindest einen Eingang (271) aufweist und Mittel zum Auswerten von an dem Eingang (271) anliegenden Signalen.

10. Automatisierungssystem (1) nach einem der vorstehenden Ansprüche 6 bis 9, bei welchem das Bussystem (2) ein Ringsystem ist.

11. Automatisierungssystem (1) nach einem der vorstehenden Ansprüche 6 bis 10, bei welchem das Bussystem (2) ein INTERBUS-Busystem ist.

## Claims

1. Method for operation of an automation system (1), wherein the automation system (1) has at least one bus system (2) with bus subscribers (21 to 29) connected thereto, and a central control device (3), wherein at least one bus subscriber (21 to 29) carries out dangerous processes, comprising:
- parameterizing and/or programming at least one bus subscriber (24, 27) via the control device (3);
- identifying an interruption in the connection to the control device (3) by the at least one bus subscriber (24, 27),
- controlling at least one output (241, 242, 272) of the at least one bus subscriber (24, 27) via the at least one bus subscriber (24, 27) as a function of the parameterizing and/or the programming upon identification of an interruption in the connection to the control device (3), wherein the at least one bus subscriber (21 to 29) carrying out dangerous processes is switched out of normal operation initially into a quasi safety state in which it is possible to maintain the control of even dangerous processes.

2. Method as claimed in claim 1, wherein an interruption is identified by the fact that the at least one bus subscriber (24, 27) does not receive any signal from the control device (3) during a time period (t₁) which can be stipulated.

3. Method as claimed in any one of the preceding claims, wherein the at least one output (241, 272) of the at least one bus subscriber (24, 27) switches to a safe state after a time period (t₂) which can be stipulated, if the connection to the control device (3) is not restored within this time period.

4. Method as claimed in any one of the preceding claims, wherein the at least one bus subscriber (24, 27) switches at least one assembly (43, 62) of the automation system (1) on or off.

5. Method as claimed in any one of the preceding claims, wherein the at least one bus subscriber (27) has at least one input (271), and the method comprises evaluating signals at the input by the at least one bus subscriber (27).

6. Automation system (1) comprising
at least one bus system (2) having bus subscribers (21 to 29) connected thereto, wherein at least one bus subscriber (21 to 29) carries out dangerous process and
at least one control device (3) connected to the bus system (2),
which has at least one bus subscriber (24, 27) which can be parameterized and/or programmed via the control device (3) and has means for identifying an interruption in the connection to the control device (3) and means for controlling at least one output (241, 242, 272) as a function of the parameterizing and/or the programming upon identification of the interruption,
and which has means for switching the at least one bus subscriber (21 to 29), which carries out dangerous processes, upon identification of an interruption in the connection out of normal operation initially into a quasi safety state in which it is possible to maintain the control of even dangerous processes.

7. Automation system (1) as claimed in claim 6, wherein the at least one bus subscriber (24, 27) has means for monitoring time.

8. Automation system (1) as claimed in any one of the preceding claims 6 to 7, wherein the at least one bus subscriber (24, 27) has means for switching at least one assembly (43, 62) on or off.

9. Automation system (1) as claimed in any one of the preceding claims 6 to 8, wherein the at least one bus subscriber (27) has at least one input (271) and means for evaluation of signals which are applied to the input (271).

10. Automation system (1) as claimed in any one of the preceding claims 6 to 9, wherein the bus system (2) is a ring system.

11. Automation system (1) as claimed in any one of the preceding claims 6 to 10, wherein the bus system (2) is an INTERBUS bus system.

## Revendications

1. Procédé pour exploiter un système d'automatisation (1), le système d'automatisation (1) présentant au moins un système de bus (2) avec des abonnés de bus (21 à 29) raccordés à ce système, ainsi qu'un dispositif de commande (3) central, au moins un abonné de bus (21 à 29) exécutant des processus dangereux, comprenant
- paramétrage et/ou programmation d'au moins un abonné de bus (24, 27) par le dispositif de commande (3),
- détection d'une interruption de la liaison avec le dispositif de commande (3) par le au moins un abonné de bus (24, 27),
- commande d'au moins une sortie (241, 242, 272) du au moins un abonné de bus (24, 27) par le au moins un abonné de bus (24, 27) en fonction du paramétrage et/ou de la programmation en cas de détection d'une interruption de la liaison avec le dispositif de commande (3), le au moins un abonné de bus (21 à 29) exécutant des processus dangereux étant commuté du mode normal d'abord dans un état de quasi-sécurité, dans lequel il est possible de conserver la commande également de processus dangereux.

2. Procédé selon la revendication 1, dans lequel une interruption est détectée par le fait que le au moins un abonné de bus (24, 27) ne reçoit pas signal du dispositif de commande (3) pendant une durée (t₁) pouvant être définie.

3. Procédé selon l'une des revendications précédentes, dans lequel la au moins une sortie (241, 272) du au moins un abonné de bus (24, 27) commute après une durée (t₂) pouvant être définie dans un état sûr lorsque la liaison avec le dispositif de commande (3) n'est pas rétablie pendant cette durée.

4. Procédé selon l'une des revendications précédentes, dans lequel le au moins un abonné de bus (24, 27) effectue la connexion ou la déconnexion d'au moins un ensemble (43, 62) du système d'automatisation (1).

5. Procédé selon l'une des revendications précédentes, dans lequel le au moins un abonné de bus (27) présente au moins une entrée (271) et le procédé comprend l'analyse de signaux sur l'entrée par le au moins un abonné de bus (27).

6. Système d'automatisation (1), comprenant au moins un système de bus (2) avec des abonnés de bus (21 à 29) raccordés à ce système, au moins un abonné de bus (21 à 29) exécutant des processus dangereux
et
au moins un dispositif de commande (3) raccordé au système de bus (2),
lequel système présente au moins un abonné de bus (24, 27) conçu de façon paramétrable et/ou programmable par le dispositif de commande (3), lequel abonné présente des moyens pour la détection d'une interruption de la liaison avec le dispositif de commande (3) et des moyens pour la commande d'au moins une sortie (241, 242, 272) en fonction du paramétrage et/ou de la programmation en cas de détection de l'interruption,
et lequel système présente des moyens pour la commutation du au moins un abonné de bus (21 à 29) exécutant des processus dangereux en cas de détection d'une interruption de la liaison du mode normal d'abord dans un quasi-état de sécurité, dans lequel il est possible de conserver la commande également de processus dangereux.

7. Système d'automatisation (1) selon la revendication 6, dans lequel le au moins un abonné de bus (24, 27) comprend des moyens pour contrôler le temps.

8. Système d'automatisation (1) selon l'une des revendications précédentes 6 à 7, dans lequel le au moins un abonné de bus (24, 27) comprend des moyens pour la connexion ou la déconnexion d'au moins un ensemble (43, 62) .

9. Système d'automatisation (1) selon l'une des revendications précédentes 6 à 8, dans lequel le au moins un abonné de bus (27) présente au moins une entrée (271) et des moyens pour l'analyse de signaux appliqués sur l'entrée (271).

10. Système d'automatisation (1) selon l'une des revendications précédentes 6 à 9, dans lequel le système de bus (2) est un système en boucle.

11. Système d'automatisation (1) selon l'une des revendications précédentes 6 à 10, dans lequel le système de bus (2) est un système de bus INTERBUS.
